# EUROPÄISCHE PATENTSCHRIFT

(11) **EP 3 507 468 B1**
(45) Veröffentlichungstag und Bekanntmachung des Hinweises auf die Patenterteilung: **05.08.2020**
(21) Anmeldenummer: 17764774.0
(22) Anmeldetag: 29.08.2017
(51) Int. Cl.: F01M 13/04, B04B 5/00, B01D 45/14, B04B 5/12, B04B 7/00, B04B 7/02

(54) **ÖLABSCHEIDER, ENTLÜFTUNGSSYSTEM FÜR EINEN VERBRENNUNGSMOTOR SOWIE VERBRENNUNGSMOTOR MIT EINEM DERARTIGEN ÖLABSCHEIDER**
OIL SEPARATOR DEVICE, VENTILATION SYSTEM FOR AN INTERNAL COMBUSTION ENGINE, AND INTERNAL COMBUSTION ENGINE COMPRISING SUCH AN OIL SEPARATOR
SÉPARATEUR D'HUILE, SYSTÈME DE DÉGAZAGE POUR UN MOTEUR À COMBUSTION INTERNE ET MOTEUR À COMBUSTION INTERNE DOTÉ D'UN TEL SÉPARATEUR D'HUILE

(30) Priorität: 30.08.2016 DE 202016104754 U
(43) Veröffentlichungstag der Anmeldung: 10.07.2019
(73) Patentinhaber: 3nine AB, 13127 Nacka Strand (SE)
(72) Erfinder: ERDMANN, Christoph, 89075 Ulm (DE); YAMAN, Yagiz, 89231 Neu-Ulm (DE); BRINKER, Sebastian, Neu-Ulm 89233 (DE); ZITAROSA, Francesco, 89257 Illertissen (DE)
(74) Vertreter: Fenix Legal KB
(86) Internationale Anmeldenummer: PCT/EP2017/071612
(87) Internationale Veröffentlichungsnummer: WO 2018/041807

(56) Entgegenhaltungen:
- EP-A1- 2 522 431
- WO-A1-2006/132577
- DE-A1-102010 002 784

## Beschreibung

Die vorliegende Erfindung betrifft einen Ölabscheider zur Abscheidung von Ölnebel und/oder Öltröpfchen aus zu reinigenden Gasen. Sie betrifft weiterhin ein Entlüftungssystem mit einem derartigen Ölabscheider sowie einen Verbrennungsmotor mit einem derartigen Ölabscheider und/oder mit einem derartigen Entlüftungssystem.

Ölabscheider werden in vielen Bereichen zur Abscheidung von Ölnebel und/oder Öltröpfchen aus Gasen eingesetzt. Insbesondere werden sie verwendet, um aus Blow-By-Gasen eines Verbrennungsmotors darin in Form von Ölnebel und/oder Öltröpfchen enthaltenes Motoröl soweit wie möglich zu entfernen. Die von Ölnebel und/oder Öltröpfchen weitestgehend gereinigten Blow-By-Gase werden dann üblicherweise in den Ansaugtrakt des Verbrennungsmotors zurückgeführt. Ein Ölabscheider des eingangs angegebenen Typs ist aus der WO 2006/132577 A1 bekannt.

Soweit im Folgenden von gereinigten Gasen gesprochen wird, meint dies Gase, die von wesentlichen Anteilen des Ölnebels und der Öltröpfchen gereinigt sind. Eine Verbesserung der Reinigungswirkung wird beispielsweise durch die vorliegende Erfindung erzielt.

Zum Einsatz kommen dabei insbesondere Ölabscheider mit einer Abscheidekammer, die von den zu reinigenden Gasen durchströmt wird. Insbesondere werden sog. aktive Ölabscheider verwendet, bei denen innerhalb der Abscheidekammer ein aktiv angetriebenes Abscheideelement, beispielsweise ein Tellerseparator, angeordnet ist. Ein derartiges Abscheideelement wie beispielsweise ein Tellerseparator ist drehbar gelagert und wird zur Abscheidung von Ölnebel und/oder Öltröpfchen aus dem zwischen den einzelnen Tellern des Tellerseparators strömenden Gas mit hoher Drehzahl gedreht.

Der Antrieb derartiger Tellerseparatoren erfolgt über ein Antriebselement, das in einer von der Abscheidekammer getrennten Antriebskammer gelagert ist und beispielsweise mit Hilfe des Öldrucks des Motoröls angetrieben wird. Antriebselement und Tellerseparator sind üblicherweise über eine Welle verbunden. Zwischen der Abscheidekammer und der Antriebskammer ist eine Trennwand angeordnet, die gegenüber der Welle eine Dichtung aufweist, beispielsweise eine Labyrinthdichtung. Die Labyrinthdichtung weist meistens zwei Dichtelemente auf, wobei ein äußeres rotationssymmetrisches Dichtelement fest mit dem Gehäuse, beispielsweise über die Trennwand, verbunden ist, und ein inneres rotationssymmetrisches Dichtelement fest mit der Welle verbunden ist. Die zwei Dichtelemente weisen an den zueinander zugewandten Stoßkanten meist komplizierte Strukturen auf, die alterierend ineinander greifen, sodass sich zwischen den Dichtelementen ein Weg mit mehreren Richtungswechseln ergibt. Somit bildet die Labyrinthdichtung in jedem Rotationszustand der Welle eine im Wesentlichen in Achswirkung der Welle wirkende Barriere für das in der Antriebskammer enthaltene Öl. Die im Stand der Technik verwendeten komplizierten Dichtstrukturen erfordern, da sie meist Hinterschnitte aufweisen, teure Herstellwerkzeuge und sind zudem in ihrer Montage sehr aufwändig.

Insbesondere bei einem hydraulisch mit dem Motoröl angetriebenen Antriebselement oder sofern das abgeschiedene Öl über die Antriebskammer in das Kurbelgehäuse zurückgeleitet wird, sind sowohl der Gaseinlaß der Abscheidekammer als auch die Antriebskammer mit dem Kurbelgehäuse verbunden. Dabei werden die Druckverhältnisse sowohl von den Volumenströmen des Blow-By-Gases als auch von der Rotation des Abscheideelements beeinflusst. Beide Größen können in der Praxis nicht getrennt werden, sollen hier zum besseren Verständnis aber getrennt betrachtet werden. Bei isoliert betrachteter Rotation des Abscheidelements ergibt sich am Gasauslass des Abscheideelements ein höherer Druck als an seinem Gaseinlass. Bei isolierter Betrachtung des Blow-By-Gas-Volumenstroms steigt der Druck am Gaseinlass der Abscheidekammer im Wesentlichen exponentiell mit dem Volumenstrom an. Ein steigender Volumenstrom wirkt dabei also entgegen der Druckdifferenz des rotierenden Abscheiders. Im Wesentlichen wirkt diese Druckdifferenz auch zwischen der Antriebskammer und dem Gasauslass der Abscheidekammer, da die Antriebskammer mit dem Kurbelgehäuse verbunden ist. Steigt der Volumenstrom sehr stark an, kann dessen Druck die Druckdifferenz am Abscheider überwiegen, dabei ergibt sich auch eine Umkehr der Druckverhältnisse zwischen Antriebskammer und Gasauslass der Abscheidekammer, so dass bereits abgeschiedenes und in die Antriebskammer ausgeleitetes Öl und gegebenenfalls Antriebsöl von der Antriebskammer durch die Labyrinthdichtung hindurch in die Abscheidekammer gelangen kann (sog. Ölreißen).

Es sind auch weitere Betriebszustände des aktiven Ölabscheiders denkbar, bei denen die Druckverhältnisse zwischen Antriebskammer und Abscheidekammer derart ungünstig sind, dass Öl aus der Antriebskammer in die Abscheidekammer angesaugt werden kann.

Ein weiteres Problem von bekannten aktiven Ölabscheidern sind der Kostenaufwand und die große Anzahl von Arbeitsschritten, die notwendig sind um die vielen Bauteile des Ölabscheiders herzustellen, insbesondere auch die aufwändige Herstellung und Montage kompliziert aufgebauter Labyrinthdichtungen.

Die vorliegende Erfindung stellt es sich daher zur Aufgabe, einen Ölabscheider mit einer verbesserten Abdichtung zwischen Antriebskammer und Abscheidekammer zur Verfügung zu stellen, der gleichzeitig einfacher, kostengünstiger und in weniger Arbeitsschritten hergestellt und montiert werden kann. Des Weiteren ist es die Aufgabe der vorliegenden Erfindung ein Entlüftungssystem sowie einen Verbrennungsmotor mit einem derartigen Ölabscheider zur Verfügung zu stellen.

Diese Aufgabe wird durch den Ölabscheider nach Anspruch 1, das Entlüftungssystem nach Anspruch 14 und den Verbrennungsmotor nach Anspruch 15 gelöst. Vorteilhafte Weiterbildungen des erfindungsgemäßen Ölabscheiders werden in den abhängigen Ansprüchen 2 bis 13 gegeben.

Der erfindungsgemäße Ölabscheider weist ein Gehäuse auf, in dem eine Abscheidekammer angeordnet ist, wobei die Abscheidekammer einen Einlaß für Gase und einen Auslaß für die Gase aufweist und wobei in der Abscheidekammer ein Tellerseparator zur Abscheidung von Ölnebel und/oder Öltröpfchen aus den Gasen drehbar angeordnet ist. In dem Gehäuse ist weiterhin eine Antriebskammer angeordnet, in der ein Antriebselement angeordnet ist. Hierbei sind die Abscheidekammer und die Antriebskammer mittels einer Trennwand voneinander getrennt. Des Weiteren weist der Ölabscheider eine Welle auf, die sich durch eine Durchgangsöffnung in der Trennwand von der Antriebskammer zur Abscheidekammer erstreckt und die das Antriebselement mit dem Tellerseparator drehbar verbindet. Mit anderen Worten erstreckt sich die Welle durch eine Durchgangsöffnung in der Trennwand von der Antriebskammer zur Abscheidekammer und verbindet dabei das Antriebselement mit dem Abscheideelement, also dem Tellerseparator, so, dass sie miteinander rotieren können ohne dass sie sich relativ zueinander bewegen. Hierbei ist zwischen der Trennwand und der Welle eine Dichtung angeordnet mit zwei einen um die Welle umlaufenden Bereich abdichtend zusammenwirkenden Dichtelementen, wovon ein erstes Dichtelement an der Trennwand längs des Umfangsrandes der Durchgangsöffnung angeordnet ist und ein zweites Dichtelement mit der Welle verbunden ist. Die Trennwand bildet also einen Träger für das erste Dichtelement und die Welle einen Träger für das zweite Dichtelement. Der erfindungsgemäße Ölabscheider zeichnet sich ferner dadurch aus, dass die Welle eine Ummantelung aus Kunststoff aufweist, die zumindest bereichsweise den der Trennwand benachbarten Teller des Tellerseparators bildet und die sich in den abgedichteten Bereich fortsetzt, und dass das zweite Dichtelement an der Ummantelung angeordnet ist.

Dadurch, dass die Ummantelung zugleich zumindest bereichsweise den der Trennwand benachbarten, also untersten, Teller bildet, können der unterste Teller sowie die Ummantelung in einem gemeinsamen Arbeitsschritt hergestellt werden, wodurch Zeit und Kosten eingespart werden können. Zudem kann sich aufgrund der Anordnung des Dichtelements an der Ummantelung aus Kunststoff eine verbesserte Dichtwirkung ergeben.

In einer vorteilhaften Ausgestaltung der Erfindung ist das zweite Dichtelement einstückig mit der Ummantelung ausgebildet oder stoffschlüssig mit der Ummantelung verbunden. Insbesondere kann im abgedichteten Bereich entweder die Ummantelung selbst als zweites Dichtelement ausgebildet sein oder das zweite Dichtelement an der Ummantelung angespritzt sein. Zudem kann die Ummantelung auch komplett einstückig mit dem untersten Teller des Tellerseparators ausgebildet oder stoffschlüssig mit dem untersten Teller verbunden sein. Durch eine derartige einteilige Ausbildung von Ummantelung, unterstem Teller und/oder zweitem Dichtelement kann die Herstellung des zweiten Dichtelements und/oder des untersten Tellers in einem gemeinsamen Arbeitsschritt mit der Herstellung der Ummantelung erfolgen, wodurch Herstellungszeit und -kosten eingespart werden können. Alternativ ist es jedoch auch denkbar, dass das zweite Dichtelement und die Ummantelung als separate Einzelteile ausgebildet sind.

Ferner kann das erste Dichtelement einstückig mit der Trennwand ausgebildet oder stoffschlüssig mit der Trennwand verbunden sein. Insbesondere kann im abgedichteten Bereich entweder die Trennwand selbst als erstes Dichtelement ausgebildet sein oder das erste Dichtelement an der Trennwand angespritzt sein. Durch eine derartige einteilige Ausbildung kann die Herstellung des ersten Dichtelements in einem gemeinsamen Arbeitsschritt mit der Herstellung der Trennwand erfolgen, wodurch Herstellungszeit und -kosten eingespart werden können. Alternativ ist es jedoch auch denkbar, dass das erste Dichtelement und die Trennwand als separate Einzelteile ausgebildet sind.

In einer weiteren vorteilhaften Ausgestaltung der Erfindung kann die Ummantelung im Bereich des zweiten Dichtelements unmittelbar an die Welle angespritzt sein.

Alternativ kann die Ummantelung im abgedichteten Bereich auch von der Welle beabstandet sein. In diesem Fall ist ein Abstand zwischen Ummantelung und Welle von 0,3 bis 5 mm, insbesondere 1 bis 3 mm vorteilhaft. Ein Abstand zwischen der Ummantelung und der Welle ermöglicht einen Toleranzausgleich bezüglich Herstellungsungenauigkeiten.

Das erste Dichtelement und das zweite Dichtelement können aus unterschiedlichen Materialien bestehen, wobei eines der Dichtelemente aus einem Thermoplast und das andere der Dichtelemente aus einem thermoplastischen Elastomer oder einem Elastomer bestehen kann. Das aus Elastomer bestehende Dichtelement kann sich an das andere Dichtelement anpassen und besser mit diesem abschließen. Ferner bietet das aus Elastomer bestehende Dichtelement ebenfalls einen größeren Spielraum bei der Montage, wohingegen das aus Thermoplast bestehende Dichtelement die notwendige Eigensteifigkeit beiträgt.

In einer bevorzugten Ausgestaltung der Erfindung können das erste Dichtelement und das zweite Dichtelement eine Labyrinthdichtung bilden. Bei einer Labyrinthdichtung ergibt sich zwischen den Dichtelementen ein im Vergleich zum direkten Weg langer Weg von der Antriebskammer in die Abscheidekammer, der mehreren Richtungswechseln unterworfen ist. Die Labyrinthdichtung bildet so eine effektive Barriere für das in der Antriebskammer enthaltene Öl, wodurch ein Hindurchtreten von Öl durch die Labyrinthdichtung aufgrund von Ölreißen verhindert werden kann.

In einer weiteren vorteilhaften Ausgestaltung der Erfindung weisen das erste und das zweite Dichtelement jeweils mindestens zwei um die Welle umlaufende Dichtlippen auf, die miteinander kämmen. Insbesondere kann das erste Dichtelement drei Dichtlippen und das zweite Dichtelement zwei Dichtlippen aufweisen oder das erste Dichtelement zwei Dichtlippen und das zweite Dichtelement drei Dichtlippen aufweisen. Die Dichtlippen können einen rechteckigen Querschnitt oder eine abgerundete Form aufweisen. Die Erstreckung der Dichtlippen in einer Richtung senkrecht zu ihrer Auskragungsrichtung hängt dabei von der Gesamtgröße des Ölabscheiders ab. Sie kann für eine einzelne Dichtlippe beispielsweise zwischen 1,5 und 5 mm betragen, wobei nicht sämtliche Dichtlippen dieselbe Erstreckung aufweisen müssen. Die Länge der Dichtlippen in Auskragungsrichtung liegt üblicherweise etwas oberhalb der Erstreckung in hierzu senkrechter Richtung. Vorteilhafte Längen betragen zwischen 2 und 7 mm, wobei die Länge der ersten Dichtelemente vorzugsweise gleich groß oder kleiner ist als die Länge der zweiten Dichtelemente. Die Dichtlippen verlängern den Weg von der Antriebskammer und zur Abscheidekammer zwischen den Dichtelementen hindurch und vergrößern so die Barriere zwischen der Antriebskammer und der Abscheidekammer.

Das erste und das zweite Dichtelement können verschiedene Orientierungen aufweisen. Sie können sich beispielsweise im Wesentlichen senkrecht, d.h. radial zur Wellenachse bzw. längs der Trennwand erstrecken, so dass der Dichtspalt sich zwischen der Antriebskammer und der Abscheidekammer im Wesentlichen radial erstreckt, d.h. dass die beiden Endbereiche des Dichtspalts zur Antriebskammer und zur Abscheidekammer in zur Wellenachse radialer Richtung zueinander indirekt benachbart sind. Auch eine Anordnung der Dichtelemente derart, dass der Dichtspalt sich zwischen der Antriebskammer und der Abscheidekammer im Wesentlichen parallel zur Achse der Welle erstreckt ist möglich, d.h. dass die beiden Endbereiche des Dichtspalts zur Antriebskammer und zur Abscheidekammer in zur Wellenachse paralleler Richtung zueinander indirekt benachbart sind. Auch nichtlineare, schräg zur Wellenachse gerichtete oder sonstige Orientierungen sind möglich.

Weiterhin können die Dichtlippen des ersten und des zweiten Dichtelementes, die miteinander kämmen, in entsprechender Weise sich parallel zur Wellenachse erstrecken, d.h. parallel zur Wellenachse ineinander eingreifen. Es ist auch möglich, das diese Dichtlippen sich in zur Wellenachse radialer Richtung erstrecken, d.h. in zur Wellenachse radialer Richtung ineinander eingreifen.

Das Antriebselement des erfindungsgemäßen Ölabscheiders kann drehbar in der Antriebskammer gelagert sein. Konkret kann das Antriebselement ein hydraulisch angetriebenes, insbesondere mittels Öl angetriebenes Antriebselement, insbesondere eine Turbine oder ein Flügelrad in Kombination mit einer stehenden Düse, sein. Die Lagerung kann beispielsweise über ein Gleitlager in der Antriebskammer erfolgen, so dass die Position des Antriebselements und der Welle genau definiert ist. Weitere Lager sind selbstverständlich möglich.

Weiterhin kann der erfindungsgemäße Ölabscheider eine in der Antriebskammer angeordnete Vorrichtung zur Erzeugung eines auf den abgedichteten Bereich wirkenden Unterdrucks, insbesondere ein Flügelrad zur Unterdruckerzeugung, das vorzugsweise zwischen dem Antriebselement und der Trennwand und/oder vorzugsweise an dem Antriebselement angeordnet ist, aufweisen. Der in der Antriebskammer erzeugte Unterdruck verhindert, dass bereits abgeschiedenes und in die Antriebskammer ausgeleitetes Öl, Schmieröl oder Motoröl, das zum Antrieb in der Antriebskammer verwendet wird, in die Abscheidekammer gesaugt wird. Das Flügelrad zur Unterdruckerzeugung kann mittels der Welle oder der Turbine angetrieben werden. Im letzteren Fall kann das Flügelrad zur Unterdruckerzeugung direkt auf der Turbine angeordnet sein.

Die vorliegende Erfindung schließt auch ein Entlüftungssystem für Blow-By-Gase eines Verbrennungsmotors mit einer Entlüftungsleitung zwischen dem Kurbelgehäuse und dem Ansaugtrakt des Verbrennungsmotors ein, wobei in der Entlüftungsleitung ein vorstehend beschriebener Ölabscheider angeordnet ist.

Außerdem schließt die vorliegende Erfindung einen Verbrennungsmotor mit einem Kurbelgehäuse und einem Ansaugtrakt ein, wobei zwischen dem Kurbelgehäuse und dem Ansaugtrakt ein vorstehend beschriebenes Entlüftungssystem angeordnet ist.

Im Folgenden werden einige Beispiele erfindungsgemäßer Ölabscheider anhand von Figuren beschrieben. Dabei werden für gleiche oder ähnliche Elemente gleiche oder ähnliche Bezugszeichen verwendet, so dass die Beschreibung der Bezugszeichen teilweise nicht wiederholt wird. In den nachfolgenden Beispielen sind neben den gemäß Anspruch 1 wesentlichen Merkmalen der vorliegenden Erfindung jeweils eine Vielzahl von optionalen Weiterbildungen in Kombination miteinander dargestellt. Es ist jedoch auch möglich, die vorliegende Erfindung durch lediglich jeweils eines der optionalen Merkmale weiterzubilden, oder durch eine Kombination der dargestellten optionalen Merkmale innerhalb eines Beispiels oder auch einer Kombination verschiedener optionaler Merkmale in verschiedenen Beispielen weiterzubilden.

Es zeigen
- Figur 1: einen Vertikalschnitt durch einen erfindungsgemäßen Ölabscheider gemäß einem ersten Ausführungsbeispiel,
- Figur 2: einen Vertikalschnitt durch einen erfindungsgemäßen Ölabscheider gemäß einem zweiten Ausführungsbeispiel,
- Figur 3: einen Vertikalschnitt durch einen erfindungsgemäßen Ölabscheider gemäß einem dritten Ausführungsbeispiel,
- Figur 4: einen Vertikalschnitt durch einen erfindungsgemäßen Ölabscheider gemäß einem vierten Ausführungsbeispiel
- Figur 5: einen Vertikalschnitt durch einen erfindungsgemäßen Ölabscheider gemäß einem fünften Ausführungsbeispiel; und
- Figur 6: einen Vertikalschnitt durch einen erfindungsgemäßen Ölabscheider gemäß einem sechsten Ausführungsbeispiel.

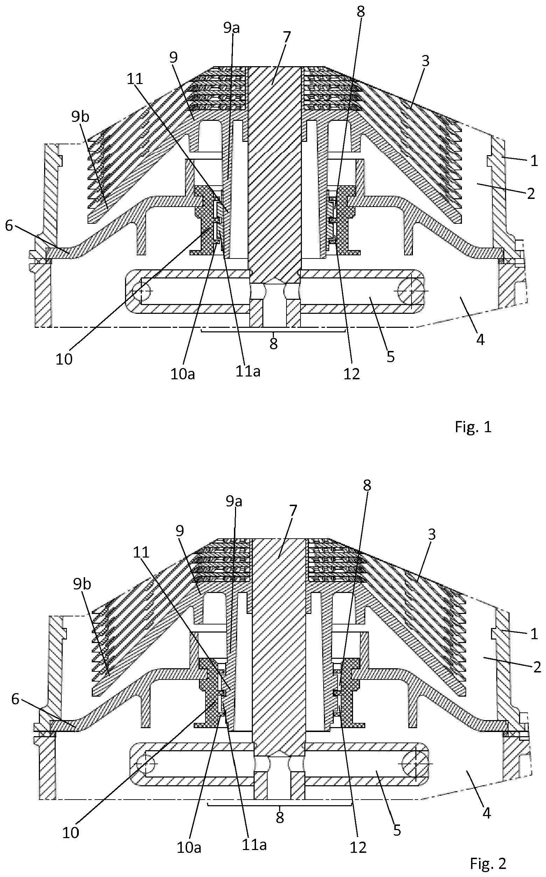

Figur 1 zeigt einen Vertikalschnitt durch einen Ölabscheider gemäß der vorliegenden Erfindung. Dieser Ölabscheider ist mit einem Gehäuse 1 und einer Abscheidekammer 2 mit einem Tellerseparator 3 versehen, wobei der Tellerseparator 3 über eine Welle 7 angetrieben wird. Benachbart zu der Abscheidekammer 2 ist eine Antriebskammer 4 vorgesehen, in der eine Turbine als Antriebselement 5 auf derselben Welle 7 wie der Tellerseparator 3 angeordnet ist. Die Turbine 5 wird durch den Öldruck des Motoröls angetrieben und treibt dabei ihrerseits den Tellerseparator 3 an. Die Zufuhr des Treiböls erfolgt dabei in herkömmlicher Weise durch eine zentrale Bohrung in der Welle 7, die über das Lager der Welle 7 in der Antriebskammer 4 mit Treiböl versorgt wird. Abscheidekammer 2 und Antriebskammer 4 sind in dem gemeinsamen Gehäuse 1 angeordnet und über eine im Wesentlichen horizontal zur Welle 7 verlaufende Trennwand 6 voneinander getrennt. Die Welle 7 weist zwischen dem Tellerseparator 3 und der Turbine 5 eine Ummantelung 9a auf, die in diesem Abschnitt von der Welle 7 beabstandet ist. Die Ummantelung 9a geht zum Tellerseparator 3 hin im Bereich 9 in den untersten Teller 9b des Tellerseparators 3 über. Dort, wo die Welle 7 die Trennwand 6 durchbricht, weist die Trennwand 6 eine Durchgangsöffnung 8 auf, in der eine Dichtung 10, 11, beispielsweise eine Labyrinthdichtung angeordnet ist, die zwischen der Antriebskammer 4 und der Abscheidekammer 2 abdichtet. Die Dichtung 10, 11 umfasst ein erstes Dichtelement 10 aus einem Thermoplast, das an der Trennwand 6 angeordnet ist, und ein zweites Dichtelement 11 aus einem Elastomer, das an der Ummantelung 9a der Welle 7 angeordnet ist. Die Dichtelemente 10 und 11 treffen an einer konzentrisch um die Ummantelung 9a verlaufenden Kontaktfläche 12 aufeinander. Das erste Dichtelement 10 weist ferner drei dem zweiten Dichtelement 11 zugewandte Dichtlippen 10a mit rechteckigem Querschnitt auf. Das zweite Dichtelement 11 weist entsprechend zwei dem ersten Dichtelement 10 zugewandte Dichtlippen 11a mit rechteckigem Querschnitt auf, sodass die Dichtlippen 10a und 11a ineinander greifen. Das Ineinandergreifen erfolgt dabei in zur Rotationsachse der Welle 7 senkrechter Richtung. Die Dichtung 10, 11 stellt eine Labyrinthdichtung dar, in der die Kontaktfläche 12 zwischen den Dichtelementen 10 und 11 bzw. der Weg durch die Dichtung hindurch vergrößert ist, um eine bessere Abdichtung zu erhalten. Aufgrund der in die Durchgangsöffnung 8 hineinreichenden Ummantelung 9a der Welle ist eine gesonderte Halterung für das zweite Dichtelement 11 nicht notwendig, wodurch Arbeitsschritte und Kosten bei der Herstellung des Ölabscheiders eingespart werden.

Figur 2 zeigt einen Vertikalschnitt eines weiteren Ausführungsbeispiels des erfindungsgemäßen Ölabscheiders. Der Ölabscheider in Figur 2 unterscheidet sich von dem Ölabscheider in Figur 1 lediglich darin, dass das zweite Dichtelement 11 einstückig mit der Ummantelung 9a der Welle 7 ausgebildet ist. In diesem Fall kann das zweite Dichtelement 11 direkt in einem Arbeitsschritt mit der Ummantelung 9a und dem untersten Teller 9b hergestellt werden.

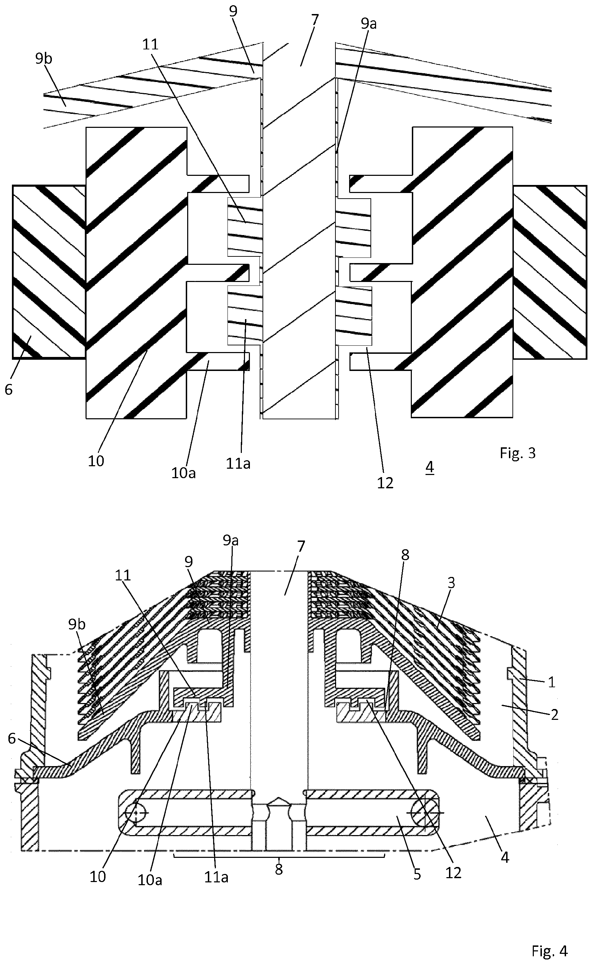

Figur 3 zeigt einen stark schematisierten Vertikalschnitt eines weiteren Ausführungsbeispiels des erfindungsgemäßen Ölabscheiders. Der Ölabscheider in Figur 3 unterscheidet sich von dem Ölabscheider in Figur 2 darin, dass die Ummantelung 9a über den gesamten Dichtbereich hinweg direkt, d.h. ohne einen Abstand, an der Welle 7 angeordnet bzw. direkt an die Welle 7 angespritzt ist. In Figur 3 wurde auf eine Darstellung der Turbine verzichtet, die Dichtspalte sind zur besseren Illustration deutlich vergrößert dargestellt.

Figur 4 zeigt einen Vertikalschnitt eines weiteren Ausführungsbeispiels des erfindungsgemäßen Ölabscheiders. Der Ölabscheider in Figur 4 unterscheidet sich von den Ölabscheidern der Figuren 1 bis 3 darin, dass sich die Kontaktfläche 12 senkrecht zur Drehachse der Welle 7 ausbreitet. Das zweite Dichtelement 11 ist oberhalb der Kontaktfläche 12, also bezüglich der Erstreckungsrichtung der Welle 7 dem Tellerseparator 3 zugewandt, positioniert, ist einstückig mit der Ummantelung 9a ausgebildet und verfügt über drei Dichtlippen 11a. Das erste Dichtelement 10 ist an der Trennwand 6 unterhalb der Kontaktfläche 12, also bezüglich der Erstreckungsrichtung der Welle 7 der Turbine 5 zugewandt, angeordnet und weist zwei Dichtlippen 10a auf, die mit den Dichtlippen 11a ineinander greifen. Die Dichtlippen 10a, 11a erstrecken sich dabei anders als in den vorhergehenden Ausführungsbeispielen parallel zur Erstreckungsrichtung der Welle 7.

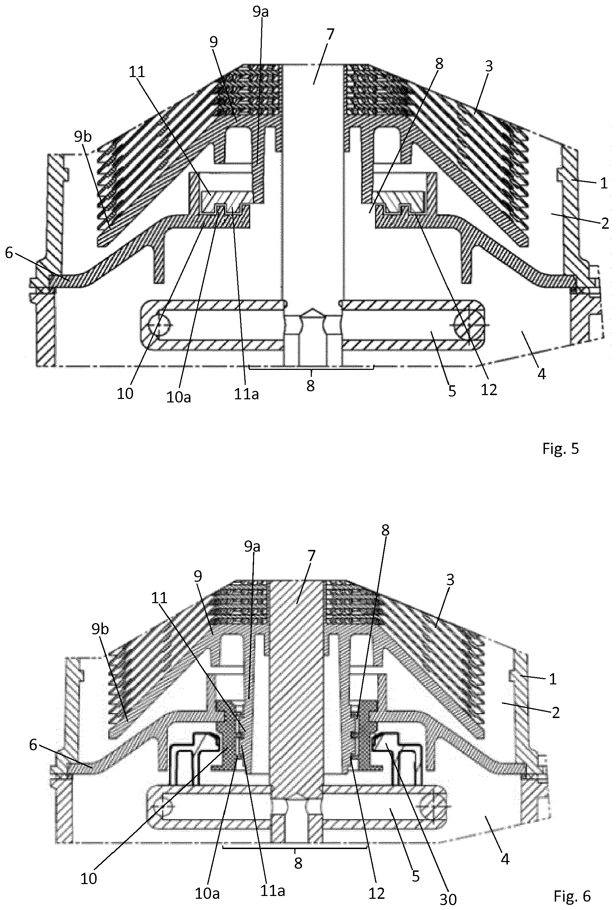

Figur 5 zeigt einen Vertikalschnitt eines weiteren Ausführungsbeispiels des erfindungsgemäßen Ölabscheiders. Der Ölabscheider in Figur 5 unterscheidet sich von dem Ölabscheider der Figur 4 darin, dass das erste Dichtelement 10 einstückig mit der Trennwand 6 ausgebildet ist, und dass das zweite Dichtelement 11 aus Elastomer als separates Element an die Ummantelung 9a angespritzt ist. Die zwei Dichtlippen 10a des ersten Dichtelements 10 greifen mit den zwei Dichtlippen 11a des zweiten Dichtelements 11 ineinander.

Figur 6 zeigt einen Vertikalschnitt eines weiteren Ausführungsbeispiels des erfindungsgemäßen Ölabscheiders. Der Ölabscheider in Figur 6 unterscheidet sich von dem Ölabscheider der Figur 2 durch ein zusätzlich auf der Turbine 5 auf deren zur Trennwand 6 weisenden Oberfläche angeordnetes Flügelrad 30. Dieses wird zusammen mit der Turbine 5 gedreht und erzeugt dann in der Antriebskammer im Bereich des Durchtritts der Welle 7 durch die Trennwand 6 einen Unterdruck und verhindert damit ein Hinüberreißen von Antriebsöl aus der Antriebskammer in die Abscheidekammer.

## Patentansprüche

1. Ölabscheider zur Abscheidung von Ölnebel und/oder Öltröpfchen aus Gasen mit einem Gehäuse (1),
einer in dem Gehäuse (1) angeordneten Abscheidekammer (2), wobei die Abscheidekammer (2) einen Einlass für Gase und einen Auslass für die Gase aufweist und in der Abscheidekammer (2) ein Tellerseparator (3) zur Abscheidung von Ölnebel und/oder Öltröpfchen aus den Gasen drehbar angeordnet ist,
einer in dem Gehäuse (1) angeordneten Antriebskammer (4), in der ein Antriebselement (5) angeordnet ist, wobei die Abscheidekammer (2) und die Antriebskammer (4) mittels einer Trennwand (6) voneinander getrennt sind,
einer Welle (7), die sich durch eine Durchgangsöffnung (8) in der Trennwand (6) von der Antriebskammer (4) zur Abscheidekammer (2) erstreckt und die das Antriebselement (5) mit dem Tellerseparator (3) drehbar verbindet,
**dadurch gekennzeichnet dass** zwischen der Trennwand (6) und der Welle (7) eine Dichtung (10, 11) angeordnet ist mit zwei einen um die Welle (7) umlaufenden Bereich abdichtend zusammenwirkenden Dichtelementen (10, 11),
wovon ein erstes Dichtelement (10) an der Trennwand (6) längs des Umfangsrandes der Durchgangsöffnung (8) angeordnet ist und ein zweites Dichtelement (11) mit der Welle (7) verbunden ist,
wobei die Welle (7) eine Ummantelung (9, 9a) aus Kunststoff aufweist,
die zumindest bereichsweise den der Trennwand (6) benachbarten Teller (9b) des Tellerseparators (3) bildet und die sich in den abgedichteten Bereich fortsetzt, und
dass das zweite Dichtelement (11) an der Ummantelung (9, 9a) angeordnet ist.

2. Ölabscheider nach dem vorhergehenden Anspruch, **dadurch gekennzeichnet, dass** das zweite Dichtelement (11) einstückig mit der Ummantelung (9, 9a) ausgebildet oder stoffschlüssig mit der Ummantelung (9, 9a) verbunden ist.

3. Ölabscheider nach dem vorhergehenden Anspruch, **dadurch gekennzeichnet,dass** im abgedichteten Bereich entweder die Ummantelung (9, 9a) selbst als zweites Dichtelement (11) ausgebildet ist oder das zweite Dichtelement (11) an der Ummantelung (9, 9a) angespritzt ist.

4. Ölabscheider nach einem der vorhergehenden Ansprüche, **dadurch gekennzeichnet, dass** das erste Dichtelement (10) einstückig mit der Trennwand (6) ausgebildet oder stoffschlüssig mit der Trennwand (6) verbunden ist.

5. Ölabscheider nach einem der vorhergehenden Ansprüche, **dadurch gekennzeichnet, dass** die Ummantelung (9, 9a) an die Welle (7) angespritzt ist.

6. Ölabscheider nach einem der vorhergehenden Ansprüche, **dadurch gekennzeichnet, dass** die Ummantelung (9, 9a) im abgedichteten Bereich von der Welle (7) beabstandet ist, insbesondere um 0,3 bis 5 mm, vorzugsweise 1 bis 3 mm beabstandet ist.

7. Ölabscheider nach einem der vorhergehenden Ansprüche, **dadurch gekennzeichnet, dass** das erste Dichtelement (10) und das zweite Dichtelement (11) aus unterschiedlichen Materialien bestehen, wobei eines der Dichtelemente (10, 11) aus einem Thermoplast und das andere der Dichtelemente (11, 10) aus einem thermoplastischen Elastomer oder einem Elastomer besteht.

8. Ölabscheider nach einem der vorhergehenden Ansprüche, **dadurch gekennzeichnet, dass** das erste Dichtelement (10) und das zweite Dichtelement (11) eine Labyrinthdichtung bilden.

9. Ölabscheider nach dem vorhergehenden Anspruch, **dadurch gekennzeichnet, dass** das erste und das zweite Dichtelement (10, 11) jeweils mindestens zwei um die Welle (7) umlaufende Dichtlippen (10a, 11a) aufweisen, die miteinander kämmen.

10. Ölabscheider nach dem vorhergehenden Anspruch, **dadurch gekennzeichnet, dass** das erste Dichtelement (10) drei Dichtlippen (10a) und das zweite Dichtelement (11) zwei Dichtlippen (11a) aufweisen.

11. Ölabscheider nach einem der vorhergehenden Ansprüche, **dadurch gekennzeichnet, dass** das Antriebselement (5) ein hydraulisch angetriebenes, insbesondere mittels Öl angetriebenes Antriebselement (5), insbesondere eine Turbine oder ein Flügelrad in Kombination mit einer stehenden Düse, ist, und dass eine in der Antriebskammer (4) angeordnete Vorrichtung zur Erzeugung eines auf den abgedichteten Bereich wirkenden Unterdrucks, insbesondere ein Flügelrad zur Unterdruckerzeugung, das vorzugsweise zwischen dem Antriebselement (5) und der Trennwand (6) und/oder vorzugsweise an dem Antriebselement (5) angeordnet ist.

12. Ölabscheider nach einem der vorhergehenden Ansprüche, **dadurch gekennzeichnet, dass** das erste und das zweite Dichtelement derart ausgebildet sind, dass der zwischen ihnen ausgebildete Dichtspalt sich zwischen der Antriebskammer und der Abscheidekammer im Wesentlichen radial oder parallel zur Drehachse der Welle erstreckt.

13. Ölabscheider nach Anspruch 9, **dadurch gekennzeichnet, dass** die miteinander kämmenden Dichtlippen sich parallel oder radial zur Drehachse der Welle erstrecken.

14. Entlüftungssystem für Blow-By-Gase eines Verbrennungsmotors mit einer Entlüftungsleitung zwischen dem Kurbelgehäuse und dem Ansaugtrakt des Verbrennungsmotors,
**dadurch gekennzeichnet, dass**
in der Entlüftungsleitung ein Ölabscheider nach einem der vorhergehenden Ansprüche angeordnet ist.

15. Verbrennungsmotor mit einem Kurbelgehäuse und einem Ansaugtrakt,
**dadurch gekennzeichnet, dass**
zwischen dem Kurbelgehäuse und dem Ansaugtrakt ein Entlüftungssystem nach dem vorhergehenden Anspruch angeordnet ist.

## Claims

1. Oil separator for separating oil mist and /or oil droplets from gases with
a housing (1),
a separating chamber (2) arranged in the housing (1), wherein the separating chamber (2) having an inlet for gases and an outlet for the gases and in the separating chamber (2) a plate separator (3) for separating oil mist and /or oil droplets is rotatably arranged from the gases,
a drive chamber (4) arranged in the housing (1), in which a drive element (5) is arranged, wherein the separating chamber (2) and the drive chamber (4) being separated from one another by means of a partition (6),
a shaft (7) which extends via a through-opening (8) in the partition (6) from the drive chamber (4) to the separation chamber (2) and which rotatably connects the drive element (5) to the plate separator (3),
**characterized in that**
a seal (10, 11) is arranged between the partition (6) and the shaft (7) with two sealing elements (10, 11) interacting in a sealing manner around a region surrounding the shaft (7),
of which a first sealing element (10) is arranged on the partition (6) along the peripheral edge of the through-opening (8) and a second sealing element (11) is connected to the shaft (7),
wherein
the shaft (7) has a casing (9, 9a) made of plastic,
which forms the part (9b) of the plate separator (3) adjacent to the partition (6) at least in regions and which continues into the sealed region, and
that the second sealing element (11) is arranged on the casing (9, 9a).

2. Oil separator according to the preceding claim, **characterized in that** the second sealing element (11) is formed in one piece with the casing (9, 9a) or is integrally connected to the casing (9, 9a).

3. Oil separator according to the preceding claim, **characterized in that** in the sealed area either the casing (9, 9a) itself is designed as a second sealing element (11) or the second sealing element (11) is molded onto the casing (9, 9a).

4. Oil separator according to one of the preceding claims, **characterized in that** the first sealing element (10) is formed in one piece with the partition (6) or is integrally connected to the partition (6).

5. Oil separator according to one of the preceding claims, **characterized in that** the casing (9, 9a) is molded onto the shaft (7).

6. Oil separator according to one of the preceding claims, **characterized in that** the casing (9, 9a) is spaced from the shaft (7) in the sealed region, in particular by 0.3 to 5 mm, preferably 1 to 3 mm.

7. Oil separator according to one of the preceding claims, **characterized in that** the first sealing element (10) and the second sealing element (11) consist of different materials, one of the sealing elements (10, 11) made of a thermoplastic and the other of the sealing elements (11 , 10) consists of a thermoplastic elastomer or an elastomer.

8. Oil separator according to one of the preceding claims, **characterized in that** the first sealing element (10) and the second sealing element (11) form a labyrinth seal.

9. Oil separator according to the preceding claim, **characterized in that** the first and the second sealing element (10, 11) each have at least two sealing lips (10a, 11a) which rotate around the shaft (7) and mesh with one another.

10. Oil separator according to the preceding claim, **characterized in that** the first sealing element (10) has three sealing lips (10a) and the second sealing element (11) has two sealing lips (11a).

11. Oil separator according to one of the preceding claims, **characterized in that** the drive element (5) is a hydraulically driven, in particular oil-driven drive element (5), in particular a turbine or an impeller in combination with a stationary nozzle, and that one in The drive chamber (4) has a device for generating a negative pressure acting on the sealed area, in particular an impeller for generating negative pressure, which is preferably arranged between the drive element (5) and the partition (6) and / or preferably on the drive element (5).

12. Oil separator according to one of the preceding claims, **characterized in that** the first and the second sealing element are designed such that the sealing gap formed between them extends between the drive chamber and the separating chamber substantially radially or parallel to the axis of rotation of the shaft.

13. Oil separator according to claim 9, **characterized in that** the intermeshing sealing lips extend parallel or radially to the axis of rotation of the shaft.

14. Ventilation system for blow-by gases of an internal combustion engine with a ventilation line between the crankcase and the intake tract of the internal combustion engine, **characterized in that** an oil separator according to one of the preceding claims is arranged in the vent line.

15. Internal combustion engine with a crankcase and an intake tract, **characterized in that** a ventilation system according to the preceding claim is arranged between the crankcase and the intake tract.

## Revendications

1. Séparateur d'huile pour séparer le brouillard d'huile et / ou les gouttelettes d'huile des gaz
comprenant un boîtier (1),
une chambre de séparation (2) disposée dans le boîtier (1), dans lequel la chambre de séparation (2) possède une entrée pour les gaz et une sortie pour les gaz et à l'intérieur de la chambre de séparation (2) est disposé en rotation à partir des gaz un séparateur à plaques (3) pour séparer le brouillard d'huile et / ou les gouttelettes d'huile,
une chambre d'entraînement (4) disposée dans le boîtier (1), dans laquelle un élément d'entraînement (5) est disposé,
dans lequel la chambre de séparation (2) et la chambre d'entraînement (4) sont séparées l'une de l'autre au moyen d'une cloison (6),
un arbre (7) qui s'étend à travers une ouverture traversante (8) dans la cloison (6) de la chambre d'entraînement (4) à la chambre de séparation (2) et qui relie de manière rotative l'élément d'entraînement (5) au séparateur à plaques (3),
**caractérisé en ce qu'**un joint d'étanchéité (10, 11) est disposé entre la cloison (6) et l'arbre (7) avec deux éléments d'étanchéité (10, 11) interagissant de manière étanche autour d'une région entourant l'arbre (7),
dont un premier élément d'étanchéité (10) est disposé sur la cloison (6) le long du bord périphérique de l'ouverture traversante (8) et un deuxième élément d'étanchéité (11) est relié à l'arbre (7),
dans lequel
l'arbre (7) possède une enveloppe (9, 9a) en plastique,
qui forme, au moins par endroits, la partie (9b) du séparateur à plaques (3) qui est adjacente à la cloison (6) et qui continue dans la zone étanche, et
**en ce que** le deuxième élément d'étanchéité (11) est disposé sur l'enveloppe (9, 9a).

2. Séparateur d'huile selon la revendication précédente, **caractérisé en ce que** le deuxième élément d'étanchéité (11) est formé d'une seule pièce avec l'enveloppe (9, 9a) ou est solidaire de l'enveloppe (9, 9a).

3. Séparateur d'huile selon la revendication précédente, **caractérisé en ce que** dans la zone étanche soit l'enveloppe (9, 9a) elle-même est conçue comme un deuxième élément d'étanchéité (11) soit le deuxième élément d'étanchéité (11) est moulé sur l'enveloppe (9, 9a).

4. Séparateur d'huile selon l'une des revendications précédentes, **caractérisé en ce que** le premier élément d'étanchéité (10) est formé d'une seule pièce avec la cloison (6) ou est solidaire de la cloison (6).

5. Séparateur d'huile selon l'une des revendications précédentes, **caractérisé en ce que** l'enveloppe (9, 9a) est moulée sur l'arbre (7).

6. Séparateur d'huile selon l'une des revendications précédentes, **caractérisé en ce que** l'enveloppe (9, 9a) est éloignée de l'arbre (7) dans la zone étanche, notamment de 0,3 à 5 mm, de préférence de 1 à 3 mm.

7. Séparateur d'huile selon l'une des revendications précédentes, **caractérisé en ce que** le premier élément d'étanchéité (10) et le deuxième élément d'étanchéité (11) sont constitués de matériaux différents, l'un des éléments d'étanchéité (10, 11) en thermoplastique et l'autre des éléments d'étanchéité (11, 10) est constitué d'un élastomère thermoplastique ou d'un élastomère.

8. Séparateur d'huile selon l'une des revendications précédentes, **caractérisé en ce que** le premier élément d'étanchéité (10) et le deuxième élément d'étanchéité (11) forment un joint labyrinthe.

9. Séparateur d'huile selon la revendication précédente, **caractérisé en ce que** le premier et le deuxième élément d'étanchéité (10, 11) ont chacun au moins deux lèvres d'étanchéité (10a, 11a) qui tournent autour de l'arbre (7) et s'engrènent l'une avec l'autre.

10. Séparateur d'huile selon la revendication précédente, **caractérisé en ce que** le premier élément d'étanchéité (10) comprend trois lèvres d'étanchéité (10a) et le deuxième élément d'étanchéité (11) comprend deux lèvres d'étanchéité (11a).

11. Séparateur d'huile selon l'une des revendications précédentes, **caractérisé en ce que** l'élément d'entraînement (5) est un élément d'entraînement (5) entraîné hydrauliquement, en particulier entraîné par de l'huile, notamment une turbine ou une roue en combinaison avec une buse fixe, et **en ce que** la chambre d'entraînement (4) possède un dispositif pour générer une pression négative agissant sur la zone étanche, en particulier une roue pour générer une pression négative, qui est de préférence disposée entre l'élément d'entraînement (5) et la cloison (6) et / ou de préférence sur l'élément d'entraînement (5).

12. Séparateur d'huile selon l'une des revendications précédentes, **caractérisé en ce que** le premier et le deuxième élément d'étanchéité sont conçus de telle sorte que l'espace d'étanchéité formé entre eux s'étend entre la chambre d'entraînement et la chambre de séparation sensiblement radialement ou parallèlement à l'axe de rotation de l'arbre.

13. Séparateur d'huile selon la revendication 9, **caractérisé en ce que** les lèvres d'étanchéité s'engrenant l'une avec l'autre s'étendent parallèlement ou radialement à l'axe de rotation de l'arbre.

14. Système de ventilation pour les gaz de carter d'un moteur à combustion interne avec une conduite de ventilation entre le carter et le conduit d'admission du moteur à combustion interne, **caractérisé en ce qu'**un séparateur d'huile selon l'une des revendications précédentes est disposé dans la conduite d'évent.

15. Moteur à combustion interne avec carter et conduit d'admission, **caractérisé en ce qu'**un système de ventilation selon la revendication précédente est disposé entre le carter et le conduit d'admission.
